# EUROPEAN PATENT SPECIFICATION

(11) **EP 2 893 662 B1**
(45) Date of publication and mention of the grant of the patent: **11.04.2018**
(21) Application number: 13770979.6
(22) Date of filing: 30.08.2013
(51) Int. Cl.: H04J 14/02

(54) **DEVICE AND METHOD FOR OPTICAL TELECOMMUNICATION**
VORRICHTUNG UND VERFAHREN ZUR OPTISCHEN TELEKOMMUNIKATION
DISPOSITIF ET PROCÉDÉ DE TÉLÉCOMMUNICATION OPTIQUE

(30) Priority: 03.09.2012 NL 1039787
(43) Date of publication of application: 15.07.2015
(73) Proprietor: C.P.J. Reeuwijk Beheer B.V., 2712 JX Zoetermeer (NL)
(72) Inventor: STOLKER, Bertus, Cornelis, 2712 JX Zoetermeer (NL)
(74) Representative: EP&C
(86) International application number: PCT/NL2013/000042
(87) International publication number: WO 2014/035236

(56) References cited:
- EP-A1- 2 180 613
- US-A1- 2005 041 971
- US-B1- 6 658 210

## Description

### Field of the invention

The invention relates to a device for optical telecommunication. The invention also relates to a method for optical telecommunication by means of such a device.

### Background of the invention

Computer and data communication networks are known wherein a distinction is made between a WAN (Wide Area Network) for communication over longer distances in the order of a kilometre or more, such as in a metropolitan area or between cities, and a LAN (Local Area Network) for communication over shorter distances in the order of 100 metres or less, such as in a building or between buildings. Increasing use is being made here of glass fibre technology with which large amounts of data can be transmitted at high speed over great distances by means of light. Using WDM (Wavelength Division Multiplexing) information can be transmitted along multiple independent channels by a single glass fibre. Information can also be transmitted here in two directions/bidirectionally, either over separate glass fibres or over a single glass fibre (full duplex). Use is made here of optical components such as a multiplexer (mux), demultiplexer (demux), (combined) mux/demux and an OADM (Optical Add Drop Multiplexer).

Within the IPC (International Patent Classification) main group H04J14 'Optical multiplex systems', and in particular the subgroup H04J14/02 'Wavelength-division multiplex systems', can be found many embodiments and configurations of optical WDM systems comprising multiplexers/demultiplexers, between which (multiplexed) multichannel (full duplex) bidirectional communication (point to point) takes place over a single glass fibre. This is usually associated with longer distances in the order of a kilometre or more. The deployment of the relatively expensive equipment required for this purpose is worthwhile here, and the saving on installation and material costs is relatively great. However, the (non-multiplexed) bidirectional communication between a multiplexer/demultiplexer and a user/apparatus over a relatively short distance in the order of 100 metres or less generally takes place over two glass fibres, see for instance US6658210B1 and US2005/041971A1. This means that per user/apparatus two glass fibres have to be connected in each case, which increases the chances of connection errors, requires more time and the deployment of more highly trained personnel. EP2180613A1 describes an optical WDM system wherein users (ONU) are each connected via star couplers [3(i)] by means of only a single glass fibre [2(i)]. Providers/apparatuses (OLT) on the one side (station side) can communicate here with users/apparatuses (ONU) on the other side (subscriber side). All apparatuses (OLT;ONU) operate at a fixed pair of wavelengths, in the given example 1.49 µm and 1.3 µm. The system comprises two series of wavelength converters [11(i);21(i)] for optical-electrical/electrical-optical conversion of wavelengths which make it possible to multiplex/demultiplex and transport the signals over a single optical fibre transmission line (30). This does however make the system complex, expensive and susceptible to failure. The available bandwidths are small and external (electrical) power supplies are necessary for the converters. There is therefore a need for an improved system for optical telecommunication which does not have the stated drawbacks, or at least does so to a lesser extent. The present invention now provides this.

### Summary of the invention

The invention provides a device according to claim 1 and a method according to claim 4. Important are the second optical parts which are each connected to an apparatus such as a switch, router, SAN device, computer or other equipment via a single third glass fibre over which non-multiplexed bidirectional optical traffic takes place. Only a single glass fibre thus need be connected per user or apparatus. This considerably simplifies connection of the apparatuses and thus results in a much smaller chance of connection errors. Characteristic are the series of pairs of first wavelengths and second wavelengths which mutually differ within the same mux/demux module and correspond between the mux/demux modules. It is thus easily possible to multiplex/demultiplex without optical-electrical/electrical-optical conversion of wavelengths, and one-to-one communication is possible between apparatuses connected to the mux/demux module, in this case second optical parts, on the one side and the apparatuses connected to the mux/demux module, in this case second optical parts, on the other side.

A conventional multichannel mux/demux (multiplexer/demultiplexer) is preferably used for each first optical part and a conventional 1 x 2 OADM (Optical Add Drop Multiplexer) for each second optical part. Such equipment is readily available at relatively low cost and can optionally be built into existing installations relatively easily.

The incoming multiplexed optical signals and the outgoing multiplexed optical signals are preferably transported bidirectionally over the first glass fibre. In addition to the non-multiplexed bidirectional communication from and to the connected users/apparatuses over the third glass fibres, the bidirectional multiplexed optical communication between the two mux/demux modules can thus also take place in full duplex over the first glass fibre.

The terms 'differ', 'correspond', 'connected', 'connect', 'incoming' and 'outgoing' are understood in the context of the invention to mean respectively 'substantially differ', 'at least substantially correspond', 'optically connected', 'optically connect', 'coming into the relevant component' and 'going out of the relevant component'.

### Brief description of the figures

The invention is elucidated hereinbelow on the basis of non-limitative exemplary embodiments.

In the drawings:
- Fig. 1 shows a functional diagram of an example of a prior art device; and
- Fig. 2 shows a functional diagram of a preferred embodiment of a device according to the invention; and
- Fig. 3 shows a detail hereof with an OADM used as optical part.

### Exemplary embodiments

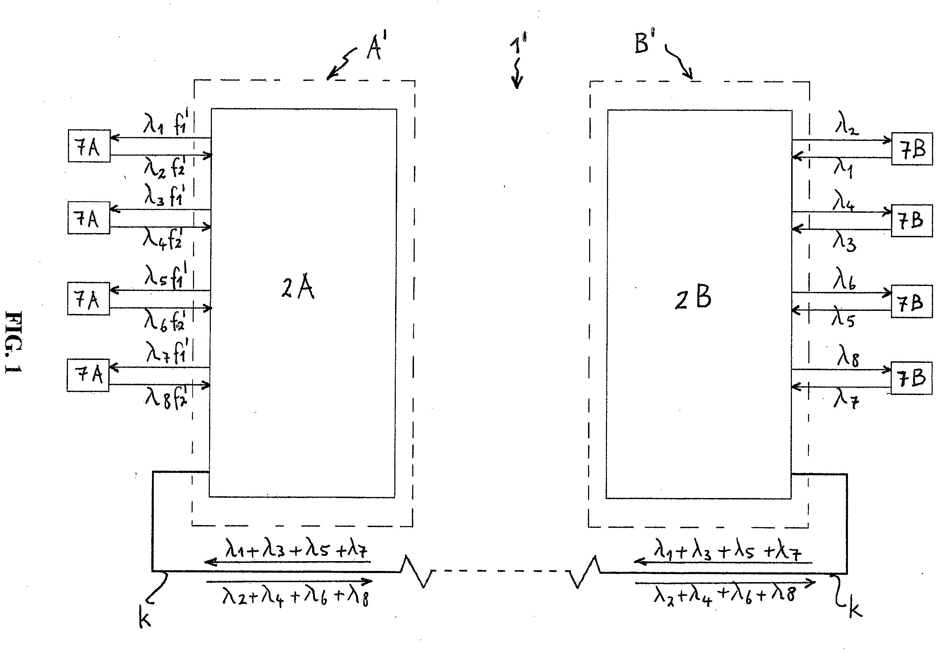

The known device (1') shown in figure 1 for optical telecommunication according to the prior art comprises two mux/demux modules (A';B') at a mutual distance in the order of a minimum of a kilometre and mutually connected by an optical guide (k). The first mux/demux module (A') comprises a first conventional multichannel mux/demux (2A) having connected thereto a number of first users/apparatuses (7A), each by means of two glass fibres (f₁',f₂'). The first mux/demux module (A') can demultiplex incoming multiplexed signals (λ1+λ3+λ5+λ7) from the optical guide (k) and carry the demultiplexed signals (λ1,λ3,λ5,λ7) in second glass fibres (f₁') to the first users/apparatuses (7A). The mux/demux module (A') can also multiplex signals (λ2,λ4,λ6,λ8) from the first users/apparatuses (7A) incoming from second glass fibres (f₂) and carry the multiplexed signals (λ2+λ4+λ6+λ8) into the optical guide (k). The second mux/demux module (B') comprises a second conventional multichannel mux/demux (2B) having connected thereto in similar manner a number of second users/apparatuses (7B). The first and the second users (7A;7B) can thus communicate with each other bidirectionally. A user/apparatus (7A;7B) is thus always connected here by means of two glass fibres (f₁',f₂') to a mux/demux module (A';B').

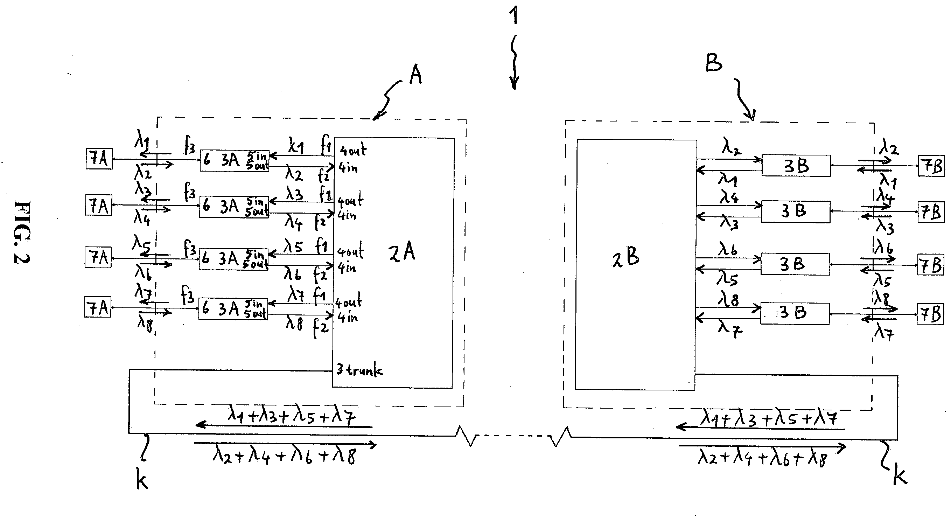

The device (1) for optical telecommunication according to the invention shown in figure 2 once again comprises two mux/demux modules (A;B), for instance at a mutual distance in the order of a minimum of a kilometre and mutually connected by an optical guide (k). The first mux/demux module (A) comprises a first part (2A), in the given example again a conventional multichannel mux/demux, once again having connected thereto a number of first users/apparatuses (7A). The first mux/demux module (A) can demultiplex the multiplexed optical signals (λ1+λ3+λ5+λ7) incoming via a first port (3ₜᵣᵤₙₖ) from the optical guide (k) and carry the demultiplexed optical signals (λ1,λ3,λ5,λ7) via second ports (4ₒᵤₜ) into second glass fibres (f₁). And again also multiplex the optical signals (λ2,λ4,λ6,λ8) incoming via second ports (4ᵢₙ) from second glass fibres (f₂) and carry the multiplexed optical signals (λ2+λ4+λ6+λ8) via the first port (3ₜᵣᵤₙₖ) into the optical guide (k). The same applies *mutatis mutandis* for the second mux/demux module (B).

The first and the second users/apparatuses (7A;7B) are each connected by means of only a single glass fibre (f₃) to a mux/demux module (A;B). In order to make this possible a mux/demux module (A;B) comprises a number of second parts (3A;3B). In the first mux/demux module (A) each second optical part (3A) is provided with two third ports (5ᵢₙ,5ₒᵤₜ), each with a second glass fibre (f₁,f₂) connected thereto; and a fourth port (6) with a third glass fibre (f₃) connected thereto. An optical signal of a first wavelength (λ1,λ3,λ5,λ7) incoming via a third port (5ᵢₙ) from a second glass fibre (f₁) is carried via the fourth port (6) into the third glass fibre (f₃), and an optical signal of a second wavelength (λ2,λ4,λ6,λ8) incoming via the fourth port (6) from the third glass fibre (f₃) is carried via a third port (5ₒᵤₜ) into a second glass fibre (f₂). The same once again applies *mutatis mutandis* for the second mux/demux module (B). Each user/apparatus (7A;7B) is thus always connected by means of only a single glass fibre (f₃) to a mux/demux module (A;B). The mux/demux modules (A;B) can be supplied ready for use by a producer such as the present applicant. The users/apparatuses (7A;7B) can then be connected on site, each by means of a single connection. This therefore results in lower costs and much less chance of connection errors.

According to the invention it is now the case for each second optical part (3A;3B) within a mux/demux module (A;B) that the first wavelength and the second wavelength differ from respectively the first wavelength and the second wavelength associated with another second optical part (3A;3B) within the same mux/demux module (A;B). It is also the case that the first wavelength and the second wavelength correspond to respectively the first wavelength and the second wavelength associated with a second optical part (3B;3A) within the other mux/demux module (B;A). Multiplexing/demultiplexing is thus possible in simple manner without optical-electrical/electrical-optical conversion of wavelengths, and one-to-one communication is possible between the apparatuses (7A) connected to the mux/demux module (A), in this case second optical parts (3A), on the one side and the apparatuses (7B) connected to mux/demux module (B), in this case second optical parts (3B), on the other side.

The multiplexed optical signals (λ1+λ3+λ5+λ7; λ2+λ4+λ6+λ8) are transported bidirectionally over a single glass fibre. In addition to the non-multiplexed bidirectional communication from and to the connected users/apparatuses over the third glass fibres, the bidirectional multiplexed optical communication between the two mux/demux modules (A;B) can thus also take place in full duplex over a single glass fibre.

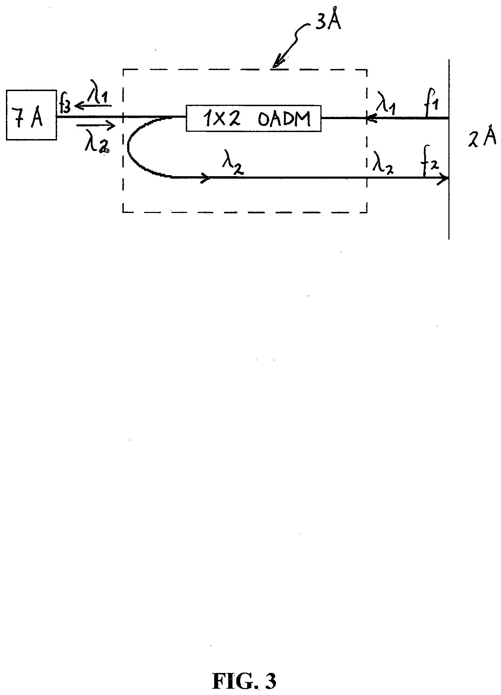

A conventional 1 x 2 OADM (Optical Add Drop Multiplexer) is preferably used for a second part (3A;3B), see figure 3. The use of conventional optical components is advantageous because they are readily available at relatively low cost and can optionally be built into existing installations relatively easily.

It will be apparent that the invention is not limited to the shown and described exemplary embodiments, but that diverse variants evident to a skilled person are possible within the scope of the invention.

## Claims

1. Device (1) for optical telecommunication, comprising:
- an optical guide (k) comprising a first glass fibre,
- two mux/demux modules (A;B) mutually connected by the optical guide (k), each mux/demux module (A) comprising:
- a first optical part (2A) provided with:
- a first port (3ₜᵣᵤₙₖ) with the optical guide connected thereto; and
- a number of second ports (4ₒᵤₜ,4ᵢₙ), each having a second glass fibre (f₁,f₂) connected thereto;
and suitable for:
- demultiplexing multiplexed optical signals (λ1+λ3+λ5+λ7;) incoming via the first port (3ₜᵣᵤₙₖ) from the optical guide and carrying the demultiplexed optical signals (λ1,λ3,λ5,λ7) via second ports (4ₒᵤₜ) into second glass fibres (f₁); and
- multiplexing optical signals (λ2,λ4,λ6,λ8) incoming via second ports (4ᵢₙ) from second glass fibres (f₂) and carrying the outgoing multiplexed optical signals (λ2+λ4+λ6+λ8) via the first port (3ₜᵣᵤₙₖ) into the optical guide; and
- a number of second optical parts (3A), each second optical part being provided with:
- two third ports (5ᵢₙ,5ₒᵤₜ), each having a second glass fibre (f₁, f₂) connected thereto; and
- a fourth port (6) having a third glass fibre (f₃) connected thereto;
and suitable for:
- carrying via the fourth port (6) into the third glass fibre (f₃) an optical signal of a first wavelength (λ1,λ3,λ5,λ7) incoming via one of the two third ports (5ᵢₙ) from a second glass fibre (f₁); and
- carrying via the other one of the two third ports (5ₒᵤₜ) into a second glass fibre (f₂) an optical signal of a second wavelength (λ2,λ4,λ6,λ8) incoming via the fourth port (6) from the third glass fibre (f₃),
wherein for each second optical part (3A;3B) within a mux/demux module (A;B) it is the case that:
- the first wavelength and the second wavelength correspond to respectively the first wavelength and the second wavelength associated with a second optical part (3B;3A) within the other mux/demux module (B;A),
**characterized in that** for each second optical part (3A;3B) within a mux/demux module (A;B) it is the case that:
- the first wavelength and the second wavelength differ from respectively the first wavelength and the second wavelength associated with another second optical part (3A;3B) within the same mux/demux module (A;B).

2. Device as claimed in claim 1, wherein a first optical part (2A;2B) comprises a conventional multichannel mux/demux.

3. Device as claimed in claim 1 or 2, wherein a second optical part (3A;3B) comprises a conventional 1 x 2 OADM, Optical Add Drop Multiplexer.

4. Method for telecommunication by means of a device (1) as claimed in any of the foregoing claims, the method comprising of:
- demultiplexing multiplexed optical signals (λ1+λ3+λ5+λ7) incoming via a first port (3ₜᵣᵤₙₖ) from the optical guide (k) and carrying the demultiplexed optical signals (λ1,λ3,λ5,λ7) via second ports (4ₒᵤₜ) into second glass fibres (f₁);
- multiplexing optical signals (λ2,λ4,λ6,λ8) incoming via second ports (4ᵢₙ) from second glass fibres (f₂) and carrying the outgoing multiplexed optical signals (λ2+λ4+λ6+λ8) via the first port (3ₜᵣᵤₙₖ) into the optical guide;
- carrying via a fourth port (6) into a third glass fibre (f₃) an optical signal of a first wavelength (λ1,λ3,λ5,λ7) incoming via one of the two third ports (5ᵢₙ) from a second glass fibre (f₁); and
- carrying via the other one of the two third ports (5ₒᵤₜ) into a second glass fibre (f₂) an optical signal of a second wavelength (λ2,λ4,λ6,λ8) incoming via the fourth port (6) from the third glass fibre (f₃),
wherein the first wavelengths and second wavelengths are chosen such that for each second optical part (3A;3B) within a mux/demux module (A;B) it is the case that.
- the first wavelength and the second wavelength correspond to the first wavelength and the second wavelength associated with a second optical part (3B; 3A) within the other mux/demux module (B;A),
**characterized in that** for each second optical part (3A;3B) within a mux/demux module (A;B) it is the case that:
- the first wavelength and the second wavelength differ from the first wavelength and the second wavelength associated with another second optical part (3A; 3B) within the same mux/demux module (A;B).

5. Method as claimed in claim 4, wherein the incoming multiplexed optical signals (λ1+λ3+λ5+λ7) and the outgoing multiplexed optical signals (λ2+λ4+λ6+λ8) are transported bidirectionally over the first glass fibre.

6. Method as claimed in claim 4 or 5, wherein a number of apparatuses (7A;7B) are connected to the device (1), each apparatus being connected via a third glass fibre (f₃) to a second optical part (3A;3B) and each apparatus being suitable for receiving an optical signal of a third wavelength and for generating an optical signal of a fourth wavelength, wherein the first wavelengths and the second wavelengths are chosen such that for each second optical part and apparatus connected thereto it is the case that the first wavelength and the second wavelength correspond to respectively the third wavelength and the fourth wavelength.

## Patentansprüche

1. Vorrichtung (1) für eine optische Telekommunikation, umfassend:
- eine optische Führung (k), umfassend eine erste Glasfaser,
- zwei mux/demux-Module (A; B), welche gegenseitig mit der optischen Führung (k) verbunden sind, wobei jedes mux/demux-Modul (A) umfasst:
- ein erstes optisches Teil (2A), versehen mit:
- einem ersten Anschluss (3ₜᵣᵤₙₖ), wobei die optische Führung damit verbunden ist; und
- etliche zweite Anschlüsse (4ₒᵤₜ, 4ᵢₙ), wobei jeder eine zweite damit verbundene Glasfaser (f₁, f₂) aufweist;
und geeignet zum:
- Demultiplexen von gemultiplexten optischen Signalen (λ1+λ3+λ5+λ7), welche über den ersten Anschluss (3ₜᵣᵤₙₖ) von der optischen Führung hereinkommen, und Übertragen der gedemultiplexten optischen Signale (λ1, λ3, λ5, λ7) über zweite Anschlüsse (4ₒᵤₜ) in zweite Glasfasern (f₁); und
- Multiplexen von optischen Signalen (λ2, λ4, λ6, λ8), welche über zweite Anschlüsse (4ᵢₙ) von zweiten Glasfasern (f₂) hereinkommen, und Übertragen der ausgehenden gemultiplexten optischen Signale (λ2+λ4+λ6+λ8) über den ersten Anschluss (3ₜᵣᵤₙₖ) in die optische Führung; und
- etliche zweite optische Teile (3A), wobei jedes zweite optische Teil versehen ist mit:
- zwei dritten Anschlüssen (5ᵢₙ, 5ₒᵤₜ), welche jeweils eine zweite damit verbundene Glasfaser (f₁, f₂) aufweisen; und
- einen vierten Anschluss (6), welcher eine damit verbundene dritte Glasfaser (f₃) aufweist;
und geeignet zum:
- Übertragen eines optischen Signals einer ersten Wellenlänge (λ1, λ3, λ5, λ7), welches über einen der zwei dritten Anschlüsse (5ᵢₙ) von einer zweiten Glasfaser (f₁) hereinkommt, über den vierten Anschluss (6) in die dritte Glasfaser (f₃); und
- Übertragen eines optischen Signals von einer zweiten Wellenlänge (λ2, λ4, λ6, λ8), welches über den vierten Anschluss (6) von der dritten Glasfaser (f₃) hereinkommt, über den anderen der zwei dritten Anschlüsse (5ₒᵤₜ) in eine zweite Glasfaser (f₂),
wobei für jedes zweite optische Teil (3A; 3B) innerhalb eines mux/demux-Moduls (A; B) der Fall gilt, dass:
- die erste Wellenlänge und die zweite Wellenlänge der ersten Wellenlänge bzw. der zweiten Wellenlänge entspricht, welche einem zweiten optischen Teil (3B; 3A) innerhalb des anderen mux/demux-Moduls (B; A) zugeordnet ist,
**dadurch gekennzeichnet, dass** für jeden zweiten optischen Teil (3A; 3B) innerhalb eines mux/demux-Moduls (A; B) der Fall gilt, dass:
- sich die erste Wellenlänge und die zweite Wellenlänge von der ersten Wellenlänge bzw. der zweiten Wellenlänge, welche einem anderen zweiten optischen Teil (3A; 3B) innerhalb des gleichen mux/demux-Moduls (A; B) zugeordnet sind, unterscheiden.

2. Vorrichtung, wie in Anspruch 1 beansprucht, wobei ein erstes optisches Teil (2A; 2B) einen herkömmlichen Multikanal-mux/demux umfasst.

3. Vorrichtung, wie in Anspruch 1 oder 2 beansprucht, wobei ein zweites optisches Teil (3A; 3B) einen herkömmlichen 1 x 2 OADM, Optical Add Drop Multiplexer, umfasst.

4. Verfahren für eine Telekommunikation mittels einer Vorrichtung (1), wie sie in einem der vorhergehenden Ansprüche beansprucht wird, wobei das Verfahren umfasst:
- Demultiplexen von gemultiplexten optischen Signalen (λ1+λ3+λ5+λ7), welche über einen ersten Anschluss (3ₜᵣᵤₙₖ) von der optischen Führung (k) hereinkommen, und Übertragen der gedemultiplexten optischen Signale (λ1, λ3, λ5, λ7) über zweite Anschlüsse (4ₒᵤₜ) in zweite Glasfasern (f₁);
- Multiplexen von optischen Signalen (λ2, λ4, λ6, λ8), welche über zweite Anschlüsse (4ᵢₙ) von zweiten Glasfasern (f₂) hereinkommen, und Übertragen der ausgehenden gemultiplexten optischen Signale (λ2+λ4+λ6+λ8) über den ersten Anschluss (3ₜᵣᵤₙₖ) in die optische Führung;
- Übertragen eines optischen Signals von einer ersten Wellenlänge (λ1, λ3, λ5, λ7), welches über einen von den zwei dritten Anschlüssen (5ᵢₙ) von einer zweiten Glasfaser (f₁) hereinkommen, über einen vierten Anschluss (6) in eine dritte Glasfaser (f₃); und
- Übertragen eines optischen Signals von einer zweiten Wellenlänge (λ2, λ4, λ6, λ8), welches über den vierten Anschluss (6) von der dritten Glasfaser (f₃) hereinkommt, über den anderen von den zwei dritten Anschlüssen (5ₒᵤₜ) in eine zweite Glasfaser (f₂),
wobei die ersten Wellenlängen und zweiten Wellenlängen derart gewählt sind, dass für jedes zweite optische Teil (3A; 3B) innerhalb eines mux/demux-Moduls (A; B) der Fall gilt, dass
- die erste Wellenlänge und die zweite Wellenlänge der ersten Wellenlänge und der zweiten Wellenlänge entsprechen, welche einem zweiten optischen Teil (3B; 3A) innerhalb des anderen mux/demux-Moduls (B; A) zugeordnet sind,
**dadurch gekennzeichnet, dass** für jedes zweite optische Teil (3A; 3B) innerhalb eines mux/demux-Moduls (A; B) der Fall gilt, dass:
- sich die erste Wellenlänge und die zweite Wellenlänge von der ersten Wellenlänge und der zweiten Wellenlänge, welche dem anderen zweiten optischen Teil (3A; 3B) innerhalb des gleichen mux/demux-Moduls (A; B) sind, unterscheiden.

5. Verfahren, wie in Anspruch 4 beansprucht, wobei die hereinkommenden gemultiplexten optischen Signale (λ1+λ3+λ5+λ7) und die ausgehenden gemultiplexten optischen Signale (λ2+λ4+λ6+λ8) bidirektional über die erste Glasfaser transportiert werden.

6. Verfahren, wie in Anspruch 4 oder 5 beansprucht, wobei etliche Einrichtungen (7A; 7B) mit der Vorrichtung (1) verbunden sind, wobei jede Einrichtung über eine dritte Glasfaser (f₃) mit einem zweiten optischen Teil (3A; 3B) verbunden ist und wobei jede Einrichtung zum Empfangen eines optischen Signals einer dritten Wellenlänge und zum Erzeugen eines optischen Signals einer vierten Wellenlänge geeignet ist, wobei die ersten Wellenlängen und die zweiten Wellenlängen derart gewählt sind, dass für jeden zweiten optischen Teil und damit verbundener Einrichtung der Fall gilt, dass die erste Wellenlänge und die zweite Wellenlänge der dritten Wellenlänge bzw. der vierten Wellenlänge entsprechen.

## Revendications

1. Dispositif (1) de télécommunication optique, comprenant :
- un guide optique (k) comprenant une première fibre de verre,
- deux modules de multiplexage/démultiplexage (A ; B) mutuellement connectés par le guide optique (k), chaque module de multiplexage/démultiplexage (A) comprenant :
- une première partie optique (2A) pourvue :
- d'un premier port (3ₜᵣᵤₙₖ) avec le guide optique connecté à celui-ci ; et
- d'un certain nombre de deuxièmes ports (4ₒᵤₜ, 4ᵢₙ), ayant chacun une deuxième fibre de verre (f₁, f₂) connectée à ceux-ci ;
et appropriée pour :
- démultiplexer les signaux optiques multiplexés (λ₁ + λ₃ + λ₅ + λ₇) entrant par l'intermédiaire du premier port (3ₜᵣᵤₙₖ) à partir du guide optique et transporter les signaux optiques démultiplexés (λ₁, λ3, λ₅, λ₇) par l'intermédiaire des deuxièmes ports (4ₒᵤₜ) dans les deuxièmes fibres de verre (f₁) ; et
- multiplexer les signaux optiques (λ₂, λ₄, λ₆, λ₈) entrant par l'intermédiaire des deuxièmes ports (4ᵢₙ) à partir des deuxièmes fibres de verre (f₂) et transporter les signaux optiques multiplexés sortants (λ₂ + λ₄ + λ₆ + λ₈) par l'intermédiaire du premier port (3ₜᵣᵤₙₖ) dans le guide optique ; et
- un certain nombre de deuxièmes parties optiques (3A), chaque deuxième partie optique étant pourvue :
- de deux troisièmes ports (5ᵢₙ, 5ₒᵤₜ), ayant chacun une deuxième fibre de verre (f₁, f₂) connectée à ceux-ci ; et
- d'un quatrième port (6) ayant une troisième fibre de verre (f₃) connectée à celui-ci ;
et appropriées pour :
- transporter, par l'intermédiaire du quatrième port (6), dans la troisième fibre de verre (f₃), un signal optique d'une première longueur d'onde (λ₁, λ₃, λ₅, λ₇) entrant par l'intermédiaire de l'un des deux troisièmes ports (5ᵢₙ) à partir d'une deuxième fibre de verre (f₁) ; et
- transporter, par l'intermédiaire de l'autre des deux troisièmes ports (5ₒᵤₜ), dans une deuxième fibre de verre (f₂), un signal optique d'une deuxième longueur d'onde (λ₂, λ₄, λ₆, λ₈) entrant par l'intermédiaire du quatrième port (6) à partir de la troisième fibre de verre (f₃),
dans lequel, pour chaque deuxième partie optique (3A ; 3B) dans un module de multiplexage/démultiplexage (A ; B) :
- la première longueur d'onde et la deuxième longueur d'onde correspondent respectivement à la première longueur d'onde et à la deuxième longueur d'onde associées à une deuxième partie optique (3B ; 3A) dans l'autre module de multiplexage/démultiplexage (B ; A),
**caractérisé en ce que**, pour chaque deuxième partie optique (3A ; 3B) dans un module de multiplexage/démultiplexage (A ; B) :
- la première longueur d'onde et la deuxième longueur d'onde diffèrent respectivement de la première longueur d'onde et de la deuxième longueur d'onde associées à une autre deuxième partie optique (3A ; 3B) dans le même module de multiplexage/démultiplexage (A ; B).

2. Dispositif selon la revendication 1, dans lequel une première partie optique (2A ; 2B) comprend un multiplexeur/démultiplexeur multicanal classique.

3. Dispositif selon la revendication 1 ou 2, dans lequel une deuxième partie optique (3A ; 3B) comprend un multiplexeur optique d'insertion-extraction, OADM, 1 x 2 classique.

4. Procédé de télécommunication au moyen d'un dispositif (1) selon l'une quelconque des revendications précédentes, le procédé comprenant :
- le démultiplexage des signaux optiques multiplexés (λ₁ + λ₃ + λ₅ + λ₇) entrant par l'intermédiaire d'un premier port (3ₜᵣᵤₙₖ) à partir du guide optique (k) et le transport des signaux optiques démultiplexés (λ₁, λ₃, λ₅, λ₇) par l'intermédiaire de deuxièmes ports (4ₒᵤₜ) dans des deuxièmes fibres de verre (f₁) ;
- le multiplexage des signaux optiques (λ₂, λ₄, λ₆, λ₈) entrant par l'intermédiaire de deuxièmes ports (4ᵢₙ) à partir de deuxièmes fibres de verre (f₂) et le transport des signaux optiques multiplexés sortants (λ₂ + λ₄ + λ₆ + λ₈) par l'intermédiaire du premier port (3ₜᵣᵤₙₖ) dans le guide optique ; et
- le transport, par l'intermédiaire d'un quatrième port (6), dans une troisième fibre de verre (f₃), d'un signal optique d'une première longueur d'onde (λ₁, λ₃, λ₅, λ₇) entrant par l'intermédiaire de l'un des deux troisièmes ports (5ᵢₙ) à partir d'une deuxième fibre de verre (f₁) ; et
- le transport, par l'intermédiaire de l'autre des deux troisièmes ports (5ₒᵤₜ), dans une deuxième fibre de verre (f₂), d'un signal optique d'une deuxième longueur d'onde (λ₂, λ₄, λ₆, λ₈) entrant par l'intermédiaire du quatrième port (6) à partir de la troisième fibre de verre (f₃),
dans lequel les premières longueurs d'onde et les deuxièmes longueurs d'onde sont choisies de sorte que, pour chaque deuxième partie optique (3A ; 3B) dans un module de multiplexage/démultiplexage (A ; B) :
- la première longueur d'onde et la deuxième longueur d'onde correspondent à la première longueur d'onde et à la deuxième longueur d'onde associées à une deuxième partie optique (3B ; 3A) dans l'autre module de multiplexage/démultiplexage (B ; A),
**caractérisé en ce que**, pour chaque deuxième partie optique (3A ; 3B) dans un module de multiplexage/démultiplexage (A ; B) :
- la première longueur d'onde et la deuxième longueur d'onde diffèrent de la première longueur d'onde et de la deuxième longueur d'onde associées à une autre deuxième partie optique (3A ; 3B) dans le même module de multiplexage/démultiplexage (A ; B).

5. Procédé selon la revendication 4, dans lequel les signaux optiques multiplexés entrants (λ₁ + λ₃ + λ₅ + λ₇) et les signaux optiques multiplexés sortants (λ₂ + λ₄ + λ₆ + λ₈) sont transportés de manière bidirectionnelle sur la première fibre de verre.

6. Procédé selon la revendication 4 ou 5, dans lequel un certain nombre d'appareils (7A ; 7B) sont connectés au dispositif (1), chaque appareil étant connecté par l'intermédiaire d'une troisième fibre de verre (f3) à une deuxième partie optique (3A ; 3B) et chaque appareil étant approprié pour recevoir un signal optique d'une troisième longueur d'onde et pour générer un signal optique d'une quatrième longueur d'onde, dans lequel les premières longueurs d'onde et les deuxièmes longueurs d'onde sont choisies de sorte que, pour chaque deuxième partie optique et appareil connecté à celle-ci, la première longueur d'onde et la deuxième longueur d'onde correspondent respectivement à la troisième longueur d'onde et à la quatrième longueur d'onde.
